# EUROPEAN PATENT SPECIFICATION

(11) **EP 0 793 915 B1**
(45) Date of publication and mention of the grant of the patent: **31.07.2002**
(21) Application number: 96600001.0
(22) Date of filing: 21.02.1996
(51) Int. Cl.: A22C 17/00, A22C 13/00

(54) **Meat products quality preservation apparatus**
Apparat zum Konservieren der Qualität von Fleischprodukten
Appareil à conserver la qualité de produits de viande

(43) Date of publication of application: 10.09.1997
(73) Proprietor: Elgeka A.E., 570 09 Kalohori, Thessaloniki (GR)
(72) Inventor: Katsiotis, Alexandros, 57009 Kalohori, Thessaloniki (GR)

(56) References cited:
- DE-A- 3 812 336

## Description

The present invention refers to a device used for maintaining the quality of processed meat products, especially sausages.

Various methods for processed meat preservation are known from the prior art. They refer either to mass additives during meat processing, such as in publications FR2515933 of 13.5.83, or WO9003118 of 5.4.90, or to sausage body enveloping films after meat processing as described in publications EP0167477 of 8.1.86 and GB0761856. The above methods succeed in maintaining the quality of the product from the point it leaves the production line till it reaches the consumer, but do not solve the problem the consumer faces after he has bought the product and starts consuming it.

It is known that a part of these sausages are being sliced at the points of sales and then being sold in smaller amounts. A larger part however is being sold in whole pieces in order to be later sliced at home.

In this particular case the consumer faces the problem of maintaining the quality of the product after the initial packaging has been opened and one surface of the sausage comes into contact with air. A usual solution is to wrap the cut product into a temporary wrapper or plastic bag that will be generally thrown away after each time the sausage is being consumed. Another solution, featuring a covering device, is disclosed in DE-A-3 812 336.

The above problem has not been tackled up till now by the sausage manufacturers. With the invention we present here we attempt to resolve the above problem of maintaining product quality throughout the consumption period.

These sausages are of a cylindrical form with two hemispherical ends. The solution we propose is a cover of an open hemispherical form that corresponds to the ends of the sausage and is being sold with it. It is manufactured of polypropylene copolymer or other material that has the same or similar physical qualities. These qualities allow the cover to attach firmly on the sides of the sausage and does not permit air entry, so that the sausage will retain its quality while being consumed.

The elasticity of its material so that there is a positive attachment of the cover on the sausage body, the increased strength of its lip so that it can stand industrial treatment and consumer re-use, temperature variations resistance, particularly of low refrigerator temperatures and suitability for food stuff are the physical qualities required.

The advantages of the proposed solution are evident:

First, it helps maintain the quality of the sausage while being consumed. Second, the material is appropriate for food use. Third, it can stand multiple use and certainly till the product is totally consumed. Finally, it makes the product more attractive to the consumer.

The figures that accompany this document present the details of this invention.

Figure 1 presents a section of the product carrying a cover that is one embodiment of the object of the present invention.

Figure 2 presents the same section with the cover of our invention, in the consumption phase.

Figure 3 is a top view of one embodiment of the present invention.

Figure 4 presents a section of one embodiment of the present invention.

Figures 5. 6 and 7 are corresponding to figures 1, 2 and 3 and present another embodiment of the cover we propose.

In order to improve its mechanical characteristics, cover (1) has a reinforced zone that runs adjacent to the opening and around the perimeter of the cover as well as an outwardly inclined surface (4) that facilitates insertion on the body of the sausage. The largest inner diameter of the cover corresponds to the largest sausage diameter so that there is the best possible fit between the two bodies. The existence of the outwardly inclined surface allows for a slightly larger diameter that will facilitate insertion.

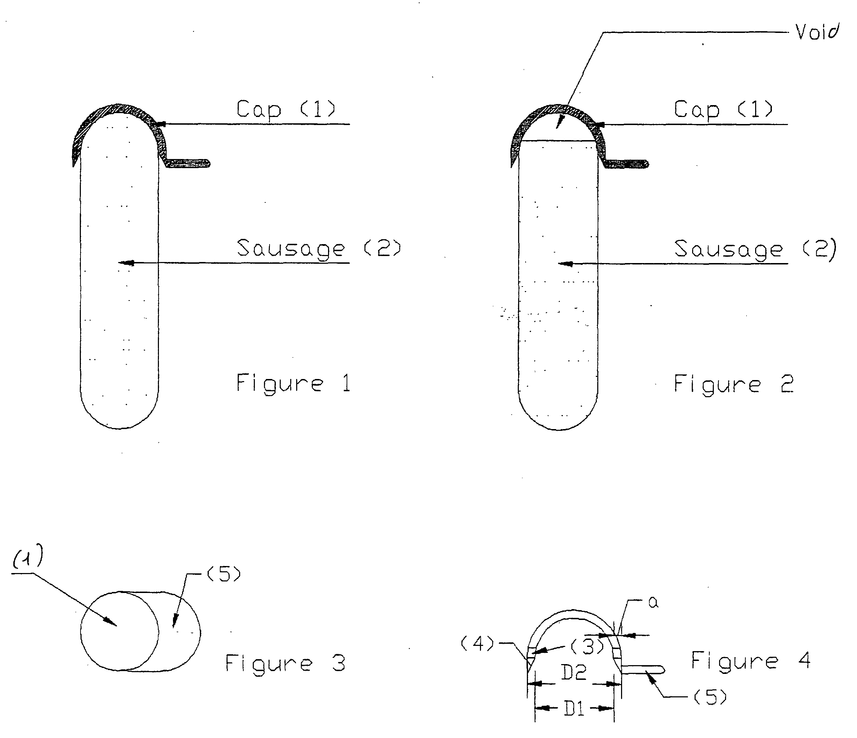

Figure 1 presents the section of a sausage carrying the cover of the invention. We can see the sausage body (2) that is of cylindrical shape with two hemispherical ends. On the top end we can see the cover (1) that is the object of our invention and that fits perfectly on this end before the start of the product consumption. This cover is added on the sausage after its production and sold with it at the points of sale. This cover features an open hemispherical shape with inner diameter D1 and outer diameter D2, where D1<D2 and its thickness is a = (D2 - D1) / 2. The inner diameter corresponds to the sausage diameter, so that there exist a tight fit between the two bodies.

In order to improve its mechanical characteristics, the cover (1) features a reinforced ring (3) along its perimeter and an outwardly inclined surface (4), that provides for an easier positioning on the sausage. The inner diameter of the cover corresponds to the maximum sausage diameter, so that the best possible fit is maintained. The outwardly inclined surface (4) creates at its end a larger diameter so that placement of the cover on the sausage becomes easier.

In order to achieve a better appearance there exists a horizontal extension (5) that extends in one direction at the plane of the opening of the cover. This will produce a more attractive product to the consumer, but it is not a necessary object of this invention. The material used is polypropylene copolymer, although any other material that can satisfy the mechanical and hygienic requirements may also be used.

Figure 2 shows the same sausage in consumption phase. One can observe the piece already consumed on its upper part and the void (6) that appears between the cover and the cut sausage surface. One can also see that due to the cover elasticity there exist a tight attachment of the cover on the sides of the sausage that will not allow air to enter this space in order to cause drop in sausage quality.

In figure 3 we can see a top view of the object of our invention. The main part of the cover (1) gets horizontally extended (5) at its opening plane that makes it look like a baseball hat.

In figure 4 we can identify the reinforced zone (3) as well as the outwards inclined surface (4) that exists in the periphery of the opening and facilitates insertion.

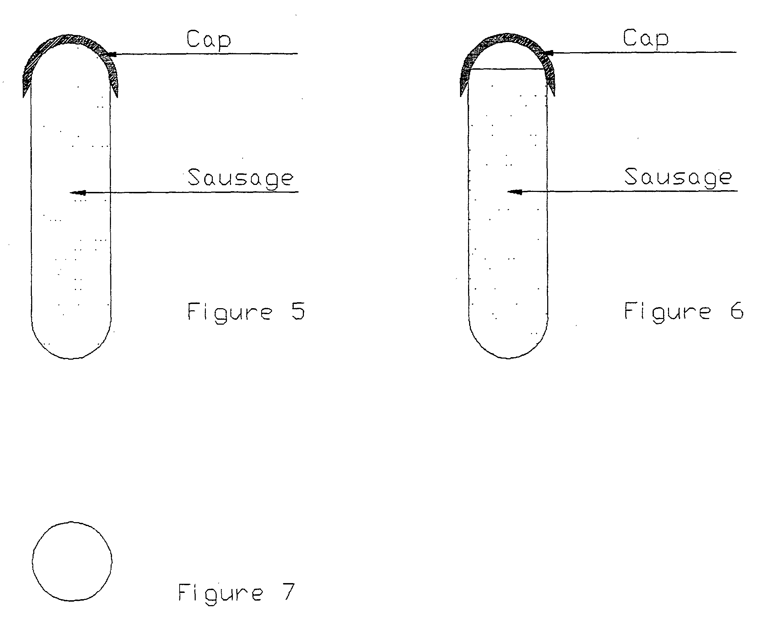

Figures 5. 6 and 7 repeat figures 1, 2 and 3 without however the horizontal extension (5). This extension (5) does not form part of the invention but only an alternative look. The shape of this cover may be anything provided that the formed opening can assure the tight covering of the cut sausage surface.

The above description is a non-binding description of our invention. The shape of this cover, as well as the used material are open to any alternative provided they can satisfy the mechanical and geometrical conditions that will make sure that the cover sits tightly on the sausage at any time after leaving production.

## Claims

1. Hemispherical sausage covering device (1) for maintaining the quality of a sausage during consumption, said device comprising a main body with maximum inner diameter D1 and outer diameter D2, the body ending in a perimeter zone that possesses an outwards inclined zone (4) towards the opening of the hemisphere, featuring the increase of the diameter from D1 to D2, said device being made of an elastic material, wherein the body comprises a reinforced zone (3) between the inclined zone (4) and the remainder of the body so that it possesses increased mechanical strength and fits tightly on one end of a sausage during the sale as well as the consumption phase.

2. Sausage covering device according to claim 1, **characterized in that** the body is made of polyethylene copolymer

3. Sausage covering device according to claim 1, **characterized in that** the body is made of polypropylene copolymer

4. Sausage covering device according to any of claims 1 to 3, **characterized in that** it possesses an extension (5) in one direction at the plane of the opening of the hemisphere

## Patentansprüche

1. Hemisphärische Wurstdeckvorrichtung für Erhaltung der Qualität eines Wurstes während seines Verbrauches, welche Vorrichtung aus einem Hauptkörper mit maximaler Innendiameter D1 und Außendiameter D2 besteht, der Hauptkörper endend in einer Kreiszone, die aus einer nach außen (4) gegenüber der Öffnung der Hemisphäre neigenden Zone besteht, deren Diameter von D1 zu D2 wächst, bei der der Körper eine verstärkte Zone, die größere mechanische Stärke hat und darauf hermetisch während der Verkaufphase ebenso wie während der Verbrauchphase passt, hat.

2. Wurstdeckvorrichtung folgens Anspruch 1 **gekennzeichnet dadurch, daß** der Körper ist aus polyethylene kopolymer erzeugt.

3. Wurstdeckvorrichtung folgens Anspruch 1 **gekennzeichnet dadurch, daß** der Körper ist aus polypropylene kopolymer erzeugt.

4. Wurstdeckvorrichtung folgens geden der Ansprüche 1 zu 3 **gekennzeichnet dadurch, daß** sie über eine Projektion auf die Ebene der Hemisphäreöffnung verfügt.

## Revendications

1. Dispositif de couverture d' une saucisse (1) pour preserver sa qualite pendant sa consommation, ledit dispositif comprenant le corps principal du diametre interieur maximal D1 et diametre exterieur D2, le corps terminant a une zone circumferante qui possede une zone inclinee vers l' exterieur (4) vers l' ouverture de l' hemisphere, disposant une augmentation de diametre de D1 a D2, ledit dispositif etant fabrique en material elastique, ledit corps disposant une zone entre la zone inclinee et le reste de corps renforcee de maniere qu' elle possede resistance mechanique augmentee et peut etre hermetiquement fixee a un bout de la saucisse pendant les phases de vente et de consommation.

2. Dispositif de couverture d' une saucisse (1) selon la revendication 1, **caracterise en ce que** le corps est fabrique de polyethylene copolymer

3. Dispositif de couverture d' une saucisse (1) selon la revendication 1, **caracterise en ce que** le corps est fabrique de polypropylene copolymer

4. Dispositif de couverture d' une saucisse (1) selon les revendications 1 a 3, **caracterise en ce qu'** il possede une extension (5) vers une direction sur la surface plate pleine de l'ouverture de l' hemisphere.
